(19) Europäisches Patentamt
European Patent Office
Office européen des brevets

(11) Publication number: 0 277 947 B1

# (12) EUROPEAN PATENT SPECIFICATION

(45) Date of publication of patent specification: 20.03.91 Bulletin 91/12

(51) Int. Cl.$^5$: F27B 1/02, C21B 11/02

(21) Application number: 86906250.5

(22) Date of filing: 28.10.86

(86) International application number: PCT/BR86/00020

(87) International publication number: WO 88/02838 21.04.88 Gazette 88/09

## (54) APPARATUS FOR PRODUCING FERROUS OR NON-FERROUS METALS FROM SELF-FLUXING OR NOT, SELF-REDUCING AGGLOMERATES OR ORES.

(30) Priority: 13.10.86 BR 8605001

(43) Date of publication of application: 17.08.88 Bulletin 88/33

(45) Publication of the grant of the patent: 20.03.91 Bulletin 91/12

(84) Designated Contracting States: AT BE CH DE FR GB IT LI

(56) References cited:
DE-A- 2 048 827
DE-C- 721 086
FR-A- 646 415
FR-A- 1 435 545
US-A- 2 760 771
See also references of WO8802838

(73) Proprietor: SETEPLA-TECNOMETAL-ENGENHARIA S.A.
Rua Luiz Gois 1626
Sao Paulo, SP (BR)
Proprietor: INDUSTRIA DE FUNDICAO TUPY LTDA.
Rua Albano Schmidt 3400
Joinville, SC (BR)

(72) Inventor: CONTRUCCI, Marcos, Albuquerque
Caminho do Sertao s/no Alto da Boa Vista
Rio de Janeiro, RJ (BR)
Inventor: SCHWARZ, Herbert
Rua Jaraguá 295
Joinville, SC (BR)
Inventor: RIZZO, Henrique, Perotta
Rua Thomaz Carvalhal 855 Apto. 12
Paraiso, Sao Paulo, SP (BR)
Inventor: COSTA, Pedro Henrique, Carpinetti
Rua Joao Theiss 72
Joinville, SC (BR)
Inventor: GONZALES, Enrique, Lopez
Rua Raul Pompéia 131 Apto. 107
Copacabana, Rio de Janeiro, RJ (BR)
Inventor: DURAN, Pedro, Ventrella
Rua Austergildo de Menezes 104
Joinville, SC (BR)
Inventor: JACOMINI, Norberto
Rua Assis Brasil, 160
Joinville, SC (BR)
Inventor: SOUZA SANTOS, Adalberto, Bierrenbach de
Rua Paraná 290 7o andar Apto. 701
Joinville, SC (BR)

(74) Representative: Parry, Christopher Stephen et al
PAGE, WHITE & FARRER 54 Doughty Street
London WC1N 2LS (GB)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to a metallurgical apparatus intended for use in producing pig iron, cast iron or another cast metal alloy by the reduction of self-fluxing or not, self-reducing agglomerates, formed by iron ore or iron oxide or other ores or oxides of other metals, agglomerated or not, and yet to the simple melting of metal charges or metal charges plus self-reducing agglomerates in any proportion so as to obtain liquid metals such as, for example,liquid pig iron, liquid cast iron or other liquid metal alloys.

Conventional processes for obtaining pig iron have been known such as, for instance, processes in blast-furnaces or electrical reducing furnaces and the like starting from iron oxide and iron ores after a particle size adjustment and from conventional pellets and other traditional agglomerates so as to obtain solid or liquid iron with a determined composition by operations which are classical in these furnaces.

In blast-furnaces, the charge comprising classified ore, pellets, sinter and other classical agglomerates, coke and limestone, is sequentially loaded by the top portion so as to form a continuous column of charge. Atmosphheric air is introduced in the furnace lower portion ; which air is preheated in regenerative or non-regenerative heaters to a temperature of 300 to 1200°C and fed throught a row of tuyeres at the upper portion of the furnace hearth. At this point, a zone with a reducing atmosphere is formed, due to the pressure of carbon monoxide formed by reaction of $CO_2$ with carbon from the coke. This CO is combined with oxygen from the iron oxide and this reduces the latter to metallic iron so as to produce pig iron.

The impurities, namely ore gangue and coke ashes, form a less dense liquid slag floating over the surface of molten pig iron.

The gases which are formed countercurrently with the charge preheat such charge and exit through the top portion. This gas comprises mainly CO, $CO_2$, $N_2$ and $H_2$ and it is routed to the regenerative preheaters for the combustion air entering the furnace and to other heating apparatusses.

A furnace and method used for reducing iron ore is disclosed in German patent application no. DE A 2048827. Here a shaft furnace is provided with cracking burners in its lower portion. The ore is fed into the upper portion of the shaft furnace, without adding coke or other fuel, with reducing gases fed into the lower portion of the shaft furnace, flowing upwardly through the descending burden causing reduction of the ore. These reducing gases are derived from a partial combustion reaction which occurs either externally of the shaft, or just upstream of the inlet in the shaft for the reducing gases.

A known furnace in which it is attempted to effect complete combustion of the coke is disclosed in French patent specification no. 646415. The coke is introduced at an upper part of the hearth, separately from the charge which is introduced at the upper portion of the shaft, with air introduced at a lower region of the hearth. The furnace suffers the disadvantage that since the arrangement includes tuyeres located below the entrance for fuel in the hearth, as fuel is introduced,the reaction of fuel with the $CO_2$ can occur, thereby increasing fuel consumption.

The present invention in a first aspect is related to an apparatus comprising a shaft furnace for providing cast iron, pig iron and other metal alloys for foundries and metallurgical plants in economical conditions more favourable than the traditional plants with conventional blast furnaces and other reducing furnaces.

In known processes using classical pellets, the reduction is carried out through CO generated from partial combustion of the coke. CO diffuses into the agglomerate and a reduction following the reaction $MeO + CO \rightarrow Me + CO_2$ takes place. $CO_2$ generated in this reaction diffuses in the opposite direction to CO. This reaction requires a certain time for the complete CO diffusion into the ore or conventional pellet, implying thus the need of using furnaces with high residence times for the charge therewithin, which times are typical of blast, furnaces.

On the other hand, self-reducing pellets present conditions which are much more favourable to reduction. A more intimate contact between the ore or oxide and finely divided charcoal or coke provides for a less reaction time since the step of diffusing CO into the pellet is not required and the reduction takes place by the reactions:

$$2.\ MeO + C \longrightarrow 2\ Me + CO_2$$

$$CO_2 + C \longrightarrow 2\ CO$$

$$MeO + CO \longrightarrow Me + CO_2$$

In this sense, the agglomerate itself provides in practice a semi-closed system with a reducing atmosphere during all the period of time in which there is available carbon therein. Otherwise, the self-reducing agglomerate, as indicated by their designation, will maintain therein an own reducing atmosphere which will not depend on the characteristics of the exterior atmosphere, that is, the kind of atmosphere existing within a shaft furnace

and provided by the upwardly-flowing gases.

According to a first aspect of the present invention there is provided a shaft furnace for producing ferrous or non-ferrous metals from, self-reducing, optionally self-fluxing, agglomerates or ores, comprising :

a cylindrical or conical shaft provided at a top portion of the shaft with an outlet chimney, or a conduit connected to a heat regenerator, for the exit of gases, and a loading gate or device for loading a charge of agglomerate or ore,

a cylindrical or conical hearth connected to the base of the shaft for containing a fuel bed the hearth having a circular or any other cross-sectional shape, and having a diameter greater than that of the shaft, to allow the positioning of fuel feeders located at an upper portion of the hearth and directly over the fuel bed,

one or more rows of tuyeres distributed so as to blow pre-heated or non-pre-heated and oxygen enriched or not air into the hearth, and for optionally injecting liquid gaseous or solid fuels sprayed beneath the feeders,

at least one pouring spout for continuous or discontinuous discharge of molten metal and slag,

a lining of refractory provided on the shaft and hearth which is optionally cooled,

characterised in that a further row or rows of tuyeres for blowing air optionally pre-heated and optionally oxygen enriched is provided on the shaft such that carbon monoxide produced by partial combustion of fuel in the hearth or from the reduction reaction within the self-reducing agglomerate is oxidised to thereby provide additional heating of the agglomerate.

According to a second aspect of the invention there is provided a process for producing ferrous or non-ferrous metals from self-reducing optionally self-fluxing, agglomerates or ores in a shaft furnace having a hearth located below a shaft comprising :

providing a charge of solid fuel in the hearth of the shaft furnace and separately providing a charge of agglomerate or ore at a top portion of the shaft of the furnace,

pre-heating the charge of agglomerate or ore

injecting air which is optionally pre-heated and optionally oxygen enriched into the hearth to provide combustion of the fuel to generate heat to cause self-reduction of the agglomerate to occur, and to melt the downwardly descending reduced agglomerate, and

injecting air which is optionally pre-heated and optionally oxygen-enriched into the shaft such that carbon monoxide produced from partial combustion of fuel in the hearth, or from the reduction reaction within the agglomerate is oxidised to thereby provide heat for pre-heating of the charge.

In this way, it is possible to convert the CO present in the furnace atmosphere and coming from the fuel partial combustion and from the reaction reduction taking place within the pellets, into energy for the process.

In the melting processes in traditional blast furnaces, the coke or another solid fuel charged by the top during the operation, travels through a descending path with the rest of the charge and reacts countercurrently with the ascending $CO_2$, following the reaction $CO_2 + C \rightarrow 2CO$, so as to result in a higher consumption of carbonaceous material without effectively gaining advantage in the reducing melting process.

According to a further aspect of the present invention there is provided a process for producing molten metal from metal-containing charges in a shaft furnace having a hearth located below a shaft comprising :

providing a charge of solid fuel in the hearth of the shaft furnace and separately providing a metal-containing charge at a top portion of a shaft of the furnace,

pre-heating the metal-containing charge,

injecting air which is optionally pre-heated and optionally oxygen-enriched into the hearth to provide combustion of the fuel to generate heat to melt the metal, and

injecting air which is optionally pre-heated and optionally oxygen-enriched into the shaft such that carbon monoxide produced from partial combustion of fuel in the hearth is oxidised to thereby provide heat for preheating of the metal-containing charge.

By carrying out CO combustion in the actual process, we obtain a higher efficiency which results in savings in fuel coke in cupola furnaces and in fuel and reducing agent in blast furnaces and in any other shaft furnace employed for reducing/melting or melting only of any other metal alloy.

## Brief Description of the Drawings

Figure 1 represents an elevational view of a shaft furnace embodying the present invention.

Figure 2 represents a sectional view through a plane passing by the top tuyere row in the furnace of figure 1.

The shaft furnace embodying this invention has innovations capable of rendering feasible the combustion of CO or of any other upwardly-flowing combustible gas which is present therein, such as $H_2$, $CH_4$ and the like, and of preventing the endothermic reaction of said gases with the fuel or reducing agent employed. This novel

furnace development comprises basically a conical or cylindrical shaft 1 having circular or any other cross-sectional shape which can have at the top position thereof, a loading gate or device 2 and an outlet for the gases which in this case are mainly comprised of varying contents of $CO_2$, CO, $H_2$ and $N_2$ flowing through the chimney 3 or being routed to the heat regenerators or recuperative heaters for preheating the blast air.

Shaft 1 has one or several rows of tuyeres 4 and 5 which blow cold or hot, $O_2$-enriched or not, air to the burning reaction of carbon monoxide to carbon dioxide ($CO + \frac{1}{2}O_2 \rightarrow CO_2$) providing additional heat for heating the charge comprising self-reducing, self-fluxing or not, ores, pig iron, scrap, foundry or steelwork wastes or mixtures of these components in the several possible proportions, from 0 to 100% of every one.

Hearth 8 is cylindrically or conically shaped having circular or any other cross-sectional shape, with the diameter of its upper portion being greater than that of shaft 1, by a sufficient amount for positioning the feeders 6 for coke, charcoal or any other solid fuel. These feeders are distributed about the hearth in a number sufficient for promoting a suitable feed of the fuel bed 7.

Hearth 8 possesses one or more rows of tuyeres 9 distributed so as to blow preheated or non-preheated air, with or without $O_2$-enrichment and with or without injection of liquid, gaseous or solid fuels sprayed beneath feeders 6 for total or partial combustion of the fuel, thereby to provide the thermal energy required for reducing and/or melting the charge. The shaft and the hearth can have a monolythic or non-monolythic refractory lining 10 and/or they may be cooled or not. Bottom of hearth 8 can be flat or have a conical elevation 11 for a better distribution of the fuel bed and in this case, it could present a siphon which may be pressurized or not or even a depression 12 to facilitate separation between slag and molten metal.

Molten metal and slag exit continuously or discontinuously the apparatus through the hearth lower portion by means of pouring spout(s).

In this type of furnace, fuel is not added together with the charge in the shaft top as in the conventional processes (although this could be done) but rather it is added by means of special devices 6 situated over the fuel bed at the shaft 1 – hearth 8 junction. Hearth 8 will operate as a gasifier and heat generator for melting the material which is metallized and preheated in shaft 1, in the case one utilizes part of the charge comprising self-reducing agglomerates or ores or which is simply preheated in the case one employs pig iron, scrap, foundry and steelwork wastes or any other metal alloy as constituents of the charge.

The shaft furnace with these improvements presents zones with distinct atmospheres having characteristics which are regulable by the type of fuel employed and by the more or less comburent injection at the various locations provided therefor.

The gases coming from the lower zone in countercurrent with the charge, transfer the thermal energy necessary for heating and reduction to this latter.

Since the charge in shaft 1 does not include coke, charcoal or any other solid fuel, the reaction $CO_2 + C \rightarrow 2CO$ which is endothermic and which consumes considerable amounts of carbon does not take place. Thus, exhaust gases exiting the apparatus comprise essentially $CO_2$ and $N_2$.

The apparatus proposed in the present invention allows for a greater flexibility in the operation and one can both effect melting of scrap, pig iron and foundry and steelwork wastes as well as of any metal alloy in, for instance, conventional cupola furnaces, and reduce pellets and other self-reducing agglomerates or ores with or without addition of scrap, pig iron, and/or foundry or steelwork wastes or any other metal alloy. Because no fuel is added through the shaft, there is an appreciable decrease in the consumption thereof since no loss of carbon by reaction with $CO_2$ from the upwardly-flowing gases, occurs.

This shaft furnace has the advantage, over cupola, blast furnaces or any other shaft furnace, of providing large fuel savings, inasmuch as carbon monoxide and other gases formed in the lower portion thereof can be burned at its upper portion so as to transfer thermal energy released during reaction to the charge descending through the shaft. The exhaust gases are formed almost exclusively by carbon dioxide and nitrogen.

The shaft furnace also operates as a kind of reducing and melting furnace, for self-reducing agglomerates and pellets and/or ores by employing coke, charcoal or any other fuel fed near the fuel bed. Also in this case, carbon monoxide formed in the hearth is burned along the shaft and the generated heat is almost integrally transferred to the descending charge thus increasing considerably thermal efficiency of the apparatus. Furthermore, since the apparatus does not include charcoal, coke or any other solid fuel in the shaft charge, the reaction $CO_2 + C \rightarrow 2CO$ or any other like endothermic reaction fails to occur so as to result in a decrease in fuel consumption.

## Industrial Applicability

The apparatus is intended for use in producing pig iron, cast iron, or any other cast metal alloy in foundries and metallurgical plants in extremely advantageous conditions under an economical standpoint.

## Claims

1. A shaft furnace for producing ferrous or non-ferrous metals from, self-reducing, optionally self-fluxing, agglomerates or ores, comprising :

a cylindrical or conical shaft (1) provided at a top portion of the shaft with an outlet chimney, or a conduit connected to a heat regenerator, for the exit of gases, and a loading gate or device (2) for loading a charge of agglomerate or ore,

a cylindrical or conical hearth (8) connected to the base of the shaft (1) for containing a fuel bed (7) the hearth having a circular or any other cross-sectional shape, and having a diameter greater than that of the shaft (1), to allow the positioning of fuel feeders (6) located at an upper portion of the hearth (8) and directly over the fuel bed (7),

one or more rows of tuyeres (9) distributed so as to blow pre-heated or non-pre-heated and oxygen enriched or not air into the hearth, and for optionally injecting liquid gaseous or solid fuels sprayed beneath the feeders (6),

at least one pouring spout for continuous or discontinuous discharge of molten metal and slag,

a lining of refractory (10) provided on the shaft and hearth which is optionally cooled,

characterised in that a further row or rows of tuyeres (4, 5) for blowing air optionally pre-heated and optionally oxygen enriched is provided on the shaft (1) such that carbon monoxide produced by partial combustion of fuel in the hearth or from the reduction reaction within the self-reducing agglomerate is oxidised to thereby provide additional heating of the agglomerate.

2. A process for producing ferrous or non-ferrous metals from self-reducing optionally self-fluxing, agglomerates or ores in a shaft furnace having a hearth (8) located below a shaft (1) comprising :

providing a charge of solid fuel in the hearth (8) of the shaft furnace and separately providing a charge of agglomerate or ore at a top portion of the shaft of the furnace,

pre-heating the charge of agglomerate or ore

injecting air which is optionally pre-heated and optionally oxygen enriched into the hearth (8) to provide combustion of the fuel to generate heat to cause self-reduction of the agglomerate to occur, and to melt the downwardly descending reduced agglomerate, and

injecting air which is optionally pre-heated and optionally oxygen-enriched into the shaft such that carbon monoxide produced from partial combustion of fuel in the hearth, or from the reduction reaction within the agglomerate is oxidised to thereby provide heat for pre-heating of the charge.

3. A process for producing molten metal from metal-containing charges in a shaft furnace having a hearth (8) located below a shaft (1) comprising :

providing a charge of solid fuel in the hearth (8) of the shaft furnace and separately providing a metal-containing charge at a top portion of a shaft of the furnace,

pre-heating the metal-containing charge,

injecting air which is optionally pre-heated and optionally oxygen-enriched into the hearth to provide combustion of the fuel to generate heat to melt the metal, and

injecting air which is optionally pre-heated and optionally oxygen-enriched into the shaft such that carbon monoxide produced from partial combustion of fuel in the hearth is oxidised to thereby provide heat for pre-heating of the metal-containing charge.

4. A process according to claim 2 or claim 3 wherein the use of solid fuels is partially substituted by liquid or gaseous fuels injected into the hearth.

5. A process according to claim 2 wherein metal-containing charge is additionally added with the charge of agglomerate or ore in a proportion of the combined charge of from 0 to 100 per cent.

## Ansprüche

1. Schachtofen zur Herstellung eisenhältiger oder nichteisenhältiger Metalle aus selbstreduzierenden, gegebenenfalls selbstgehenden Agglomeraten oder Erzen, umfassend :

einen zylindrischen oder konischen Schacht (1), der am Oberteil des Schachts mit einem Auslaßkamin oder einer mit einem Wärmeregenerator verbundenen Leitung zum Austritt von Gasen und einem Beladetor oder einer Einrichtung (2) zum Beladen mit einer Charge aus Agglomerat oder Erz versehen ist,

einen zylindrischen oder konischen Ofen (8), der mit der Basis des Schachts (1) verbunden ist, zur Aufnahme eines Brennstoffbettes (7), wobei der Ofen eine kreisförmige oder irgendeine andere Querschnittsform und einen größeren Durchmesser als der Schacht (1) hat, um die Positionierung von an einem oberen Teil des Ofens (8) und direkt über dem Brennstoffbett (7) befindlichen Brennstoffzufuhreinrichtungen (6) zu ermöglichen,

eine oder mehrere Reihen von Düsen (9), die so verteilt sind, daß sie vorgewärmte oder nicht-vorgewärmte und mit Sauerstoff angereicherte oder nicht angereicherte Luft in den Ofen blasen und gegegebenenfalls zum Einspritzen flüssiger, gasförmiger oder fester Brennstoffe, die unter die Zufuhreinrichtungen (6) gesprüht werden, dienen,

zumindest eine Ausgießschnauze zum kontinuierlichen oder diskontinuierlichen Ablassen von flüssigem Metall und Schlacke,

eine für Schacht und Ofen vorgesehene Auskleidung aus feuerfestem Material (10), die gegebenenfalls gekühlt ist,

dadurch gekennzeichnet, daß eine weitere Reihe oder Reihen von Düsen (4, 5) zum Einblasen von gegebenenfalls vorgewärmter und gegebenenfalls mit Sauerstoff angereicherter Luft am Ofen (1) vorgesehen ist (sind), so daß durch eine teilweise Verbrennung des Brennstoffes im Ofen oder aus der Reduktionsreaktion innerhalb des sich selbst-reduzierenden Agglomerats erzeugtes Kohlenmonoxid oxidiert wird, wodurch eine zusätzliche Erwärmung des Agglomerats gegeben ist.

2. Verfahren zur Herstellung eisenhältiger oder nichteisenhältiger Metalle aus selbstreduzierenden, gegebenenfalls selbstgehenden Agglomeraten oder Erzen in einem Schachtofen mit einem unter einem Schacht (1) befindlichen Ofen (8), umfassend :

das Vorsehen einer Charge aus festem Brennstoff im Ofen (8) des Schachtofens und das separate Vorsehen einer Charge aus Agglomerat oder Erz an einem oberen Teil des Schachtes des Ofens,

das Vorwärmen der Charge aus Agglomerat oder Erz,

das Einblasen von gegebenenfalls vorgewärmter und gegebenenfalls mit Sauerstoff angereicherter Luft in den Ofen (8) zum Verbrennen des Brennstoffes zur Erzeugung von Wärme, um den Eintritt der Selbstreduktion des Agglomerats zu bewirken und das nach unten absinkende reduzierte Agglomerat zu schmelzen, und

das Einblasen von gegebenenfalls vorgewärmter und gegebenenfalls mit Sauerstoff angereicherter Luft in den Schacht, so daß das aus der teilweisen Verbrennung des Brennstoffes im Ofen oder aus der Reduktionsreaktion innerhalb des Agglomerats erzeugte Kohlenmonoxid oxidiert wird, um dadurch Wärme zum Vorwärmen der Charge zu schaffen.

3. Verfahren zur Herstellung flüssigen Metalls aus metallhältigen Chargen in einem Schachtofen mit einem unter einem Schacht (1) befindlichen Ofen (8), umfassend :

das Vorsehen einer Charge aus festem Brennstoff im Ofen (8) des Schachtofens und das separate Vorsehen einer metallhältigen Charge an einem oberen Teil eines Schachtes des Ofens,

das Vorwärmen der metallhältigen Charge,

das Einblasen von gegebenenfalls vorgewärmter und gegebenenfalls mit Sauerstoff angereicherter Luft in den Ofen zur Verbrennung des Brennstoffes zwecks Erzeugung von Wärme zum Schmelzen des Metalls, und

das Einblasen von gegebenenfalls vorgewärmter und gegebenenfalls mit Sauerstoff angereicherter Luft in den Schacht, so daß aus der teilweisen Verbrennung des Brennstoffs im Ofen erzeugtes Kohlenmonoxid oxidiert wird und dadurch Wärme zum Vorwärmen der metallhältigen Charge geschaffen wird.

4. Verfahren nach Anspruch 2 oder Anspruch 3, worin die festen Brennstoffe teilweise durch flüssige oder gasförmige, in den Ofen eingeleitete Brennstoffe substituiert werden.

5. Verfahren nach Anspruch 2, worin eine metallhältige Charge zusätzlich mit der Charge aus Agglomerat oder Erz in einem Verhältnis zur gesamten Charge von 0 bis 100 Prozent zugegeben wird.

## Revendications

1. Four à cuve destiné à produire des métaux ferreux ou non ferreux à partir d'agglomérats ou minerais autoréductibles, éventuellement autofondants, comprenant :

une cuve (1) cylindrique ou conique munie à sa portion supérieure d'une cheminée de sortie, ou d'une conduite raccordée à un récupérateur de chaleur, pour la sortie des gaz, et d'une porte ou d'un dispositif de chargement (2) servant à charger une charge d'agglomérés ou de minerais,

un creuset (8) cylindrique ou conique relié à la base de la cuve (1) et destiné à contenir un lit de combustible (7), le creuset ayant en section transversale une forme circulaire ou une autre forme quelconque, et ayant un diamètre supérieur à celui de la cuve (1), pour permettre de positionner les alimentateurs de combustible (6) situés au niveau d'une partie supérieure du creuset (8) et directement au-dessus du lit de combustible (7),

une ou plusieurs rangées de tuyères (9) réparties de manière à souffler de l'air préchauffé ou non préchauffé et enrichi en oxygène ou non, dans le creuset, et pour injecter éventuellement des combustibles, liquides, gazeux ou solides pulvérisés sous les alimentateurs (6),

au moins un bec de coulée prévu pour le déchargement continu ou discontinu du métal fondu et du laitier,

un revêtement de réfractaire (10) prévu sur la cuve et sur le creuset et qui est éventuellement refroidi,

caractérisé en ce qu'il est prévu sur la cuve (1) une autre ou plusieurs autres rangées de tuyères (4, 5) pour souffler de l'air, éventuellement préchauffé et éventuellement enrichi en oxygène, de manière que l'oxyde de carbone produit par la combustion partielle du combustible dans le creuset, ou issu de la réaction de réduction qui se produit dans la masse de l'aggloméré autoréductible, s'oxyde pour effectuer un chauffage additionnel de l'aggloméré.

2. Procédé pour produire des métaux ferreux ou non ferreux à partir d'agglomérés ou minerais autoréductibles, éventuellement autofondants, dans un four à cuve possédant un creuset (8) situé sous une cuve (1) consistant à :

préparer une charge de combustible solide dans le creuset (8) du four à cuve et préparer séparément une charge d'aggloméré ou de minerai à la portion supérieure de la cuve de l'appareil,

préchauffer la charge d'aggloméré ou de minerais,

injecter dans le creuset (8) de l'air qui est éventuellement préchauffé et éventuellement enrichi en oxygène pour assurer la combustion du combustible afin de dégager de la chaleur utile pour provoquer l'autoréduction de l'aggloméré, et pour fondre l'aggloméré réduit mis en mouvement descendant, et

injecter dans la cuve de l'air qui est éventuellement préchauffé et éventuellement enrichi en oxygène de manière que l'oxyde de carbone issu de la combustion partielle du combustible dans le creuset, ou issu de la réaction de réduction produite dans la masse de l'aggloméré s'oxyde pour dégager ainsi de la chaleur pour le préchauffage de la charge.

3. Procédé pour produire du métal fondu à partir de charges contenant du métal dans un four à cuve possédant un creuset (8) situé sous une cuve (1) consistant à :

préparer une charge de combustible solide dans le creuset (8) du four à cuve et préparer séparément une charge contenant un métal à la portion supérieure de la cuve du four,

préchauffer la charge contenant du métal,

injecter dans le creuset de l'air qui est éventuellement préchauffé et éventuellement enrichi en oxygène pour assurer la combustion du combustible afin de dégager de la chaleur pour fondre le métal, et

injecter dans la cuve de l'air qui est éventuellement préchauffé et éventuellement enrichi en oxygène de manière que l'oxyde de carbone issu de la combustion partielle du combustible dans le creuset s'oxyde pour dégager ainsi de la chaleur pour le préchauffage de la charge contenant du métal.

4. Procédé selon la revendication 2 ou la revendication 3, dans lequel l'utilisation de combustibles solides est partiellement remplacée par des combustibles liquides ou gazeux injectés dans le creuset.

5. Procédé selon la revendication 2, dans lequel la charge contenant un métal est ajoutée additionnellement à la charge d'aggloméré ou de minerai, dans une proportion de 0 à 100% de la charge totale.

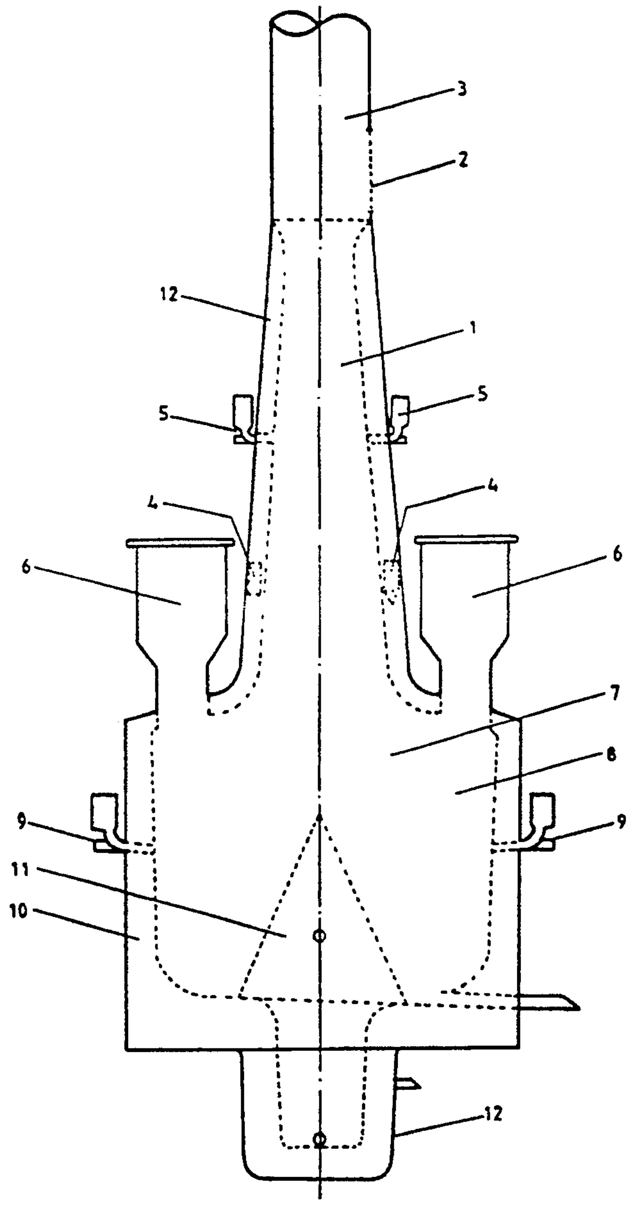


FIG.1

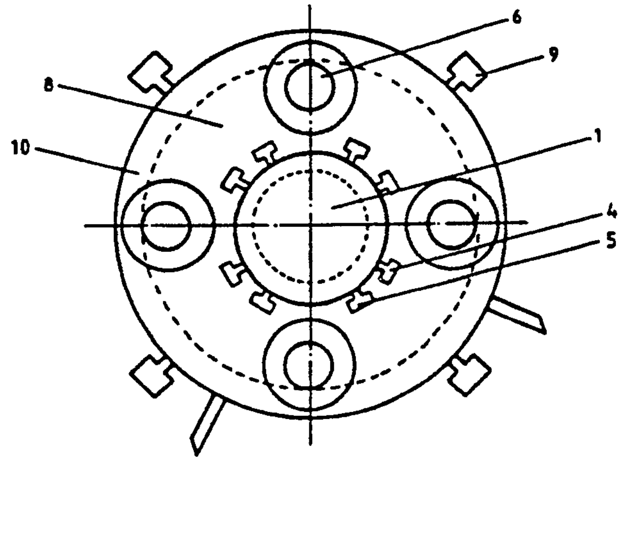


FIG.2